Europäisches Patentamt

**European Patent Office**

Office européen des brevets

(19)

(11) Publication number: **0 117 332**
A2

## (12) EUROPEAN PATENT APPLICATION

(21) Application number: **83304725.1**

(22) Date of filing: **15.08.83**

(51) Int. Cl.³: **C 04 B 31/36**

(30) Priority: **28.02.83 HU 67383**

(43) Date of publication of application: **05.09.84**
**Bulletin 84/36**

(84) Designated Contracting States: **AT BE CH DE FR GB IT**
**LI LU NL SE**

(71) Applicant: **NYUGATMAGYARORSZAGI FAGAZDASAGI**
**KOMBINAT, Pf. 142, H-9702 Szombathely (HU)**

(72) Inventor: **Schmidt, Ernö, Karpati Kelemen u. 21,**
**H-9700 Szombathely (HU)**

(74) Representative: **Hedley, Nicholas James Matthew et al,**
**T.Z. Gold & Company 9 Staple Inn, London WC1V 7QH**
**(GB)**

(54) **Process for the production of shaped articles made of cement and containing reinforcing vegetable fibres.**

㊳ The present invention provides a method of producing articles containing cement and reinforcing vegetable fibres. Hitherto, the fibres had to be treated chemically in order to ensure sufficient bonding between the cement and the fibres. The present invention removes the need for the chemical pre-treatment of the fibres and involves a two stage process of mixing the cement powder, water and the fibres. In the first stage, the cement and water are mixed together to give a homogeneous mixture which is then admixed with the fibres. The resulting slurry is then formed to shape and allowed to set.

- 1 -

Process for the production of
shaped articles made of cement
and containing reinforcing
vegetable fibres

In processes for the production of articles made
of cement and containing reinforcing vegetable fibre
presently used throughout the world, fibrous material -
usually not dried by artificial methods - the cement
necessary for sticking the fibres together and the water
required for cement-hydration, and possibly hardener,
are mixed with each other in a mixer. The purpose of
this mixing process is the following:
- to bring all cement grains in contact with water
   necessary for the hydration,
- uniform distribution of the cement-mortar on the
   surface of the fibrous material,
- to produce similarly uniform distribution of the
   hardener on all individual cement grains.
This diversified technological requirement is not
easily met. The uncertainty unavoidably arising in the
execution of the process usually results in an excess of
water and cement. The polysaccharides in the vegetable
fibres - when in naturally wet condition, or the moisture
content is nearly the same - dissolve. The dissolved
polysaccharides prevent the bond of the cement to the
fibres. In order to counter this process, treatment
with different chemicals is used.

According to the present invention, the mixing of the vegetable fibres, cement, water for hydration and hardener does not take place together and at the same time.

In the first step of the new process, the cement, water, all plasticizing agents and the hardener are contacted during an intensive mixing process, which results in a cement-colloid. This cement-colloid is added to the fibrous material. By intensive mixing the cement-colloid is uniformly distributed on the surface of the fibrous material.

It is characteristic to the cement-colloid that its components - water, cement, plasticizing agent and hardener - do not separate from each other even after a long time. Furthermore it is characteristic that the water adheres to the surface of the cement grains with high cohesive force. This cohesive force is capable to counterbalance the capillary force arising on the surface of the fibrous material.

The fibrous material may be artifically dried prior to mixing with the cement-colloid (or cement mortar). The drying results in several technological advantages, such as:

- the polysaccharides disturbing the hydration of the cement will be crystallized,
- the varying moisture content of the vegetable material can be set to a constant known value, thereby facilitating all further production processes,

- the moisture content of the end-product may be so
low that drying of the end-product i.e. the
cement - fibre board may be omitted.

Preparation of the cement-mortar results in the
setting of an accurately controlled water:cement ratio
and in the safe wetting of the cement grains.  In this
way overdosage of the water and cement - usual in the
practice - is avoided.  The intensive wetting of the
cement grains in the colloidal state does not result in
the deterioration of the quality of the end-product, even
if cement of poor quality is used.

CLAIMS

1. A process of mixing material produced from vegetable fibres, cement and water necessary for hydration, characterised in that first cement mortar of controlled water:cement factor is prepared and this is then admixed with the fibrous material.

2. A process as claimed in claim 1, characterised in that the effect of the mechanical force arising during the production of colloid - bringing about the further breakdown of the elementary cement grains, followed by intensive mixing with water - results in a cohesive force between the water and the cement grains that counter-balances the capillary force arising on the surface of the fibrous material, the cement ensuring the production of a product with adequate strength even if cement of poor quality is used.

3. A process as claimed in claim 1 or claim 2, characterised in that the fibres are artificially dried and are not treated with chemicals prior to mixing with cement-colloid.

4. A process of making an article containing cement and reinforcing vegetable fibres, wherein cement, water and fibres are mixed together and the article is cast and allowed to set, characterised in that the mixing takes place in two steps, in the first step, the cement and water are mixed together to form a homogeneous mixture and in the second step, the mixture is admixed with the fibres.

5. A process as claimed in claim $^4$, characterised in that the fibres are dried prior to the second step.

6. A process as claimed in claim $^4$ or 5, characterised in that the fibres are not chemically treated prior to the first step.

7. A process as claimed in any one of claims $^4$ to 7, characterised in that hardener and other desired additives are added, preferably in the first step.

8. An article made by the process claimed in any one of claims 1 to 7.